# EUROPÄISCHE PATENTSCHRIFT

(11) **EP 2 439 900 B1**
(45) Veröffentlichungstag und Bekanntmachung des Hinweises auf die Patenterteilung: **30.12.2015**
(21) Anmeldenummer: 11184139.1
(22) Anmeldetag: 06.10.2011
(51) Int. Cl.: H04L 29/06

(54) **Verfahren und Vorrichtung zur Authentifizierung**
Method and device for authentification
Procédé et dispositif destinés à l'authentification

(30) Priorität: 08.10.2010 DE 102010042204
(43) Veröffentlichungstag der Anmeldung: 11.04.2012
(73) Patentinhaber: ecsec GmbH, 96247 Michelau (DE)
(72) Erfinder: Hühnlein, Tina, 96247 Michelau (DE)
(74) Vertreter: Isarpatent

(56) Entgegenhaltungen:
- EP-A1- 1 930 836
- US-A1- 2006 053 124
- US-A1- 2008 196 089
- XUEBING QING ET AL: "KEAML - Key Exchange and Authentication Markup Language", ELECTRICAL AND COMPUTER ENGINEERING, CANADIAN CONFERENCE ON, IEEE, PI, 1. Mai 2006 (2006-05-01), Seiten 634-638, XP031004541, ISBN: 978-1-4244-0038-6

## Beschreibung

### GEBIET DER ERFINDUNG

Die Erfindung betrifft eine Authentifizierungsvorrichtung zur Authentifizierung anhand von unterschiedlichen Typen von Authentifizierungsprotokollen und ein Verfahren zur Authentifizierung.

### TECHNISCHER HINTERGRUND

Unter Authentifizierung versteht man den Nachweis einer behaupteten Eigenschaft, wie zum Beispiel der Identität, einer ersten Partei gegenüber einer zweiten Partei. Die erste und die zweite Partei können eine Person, aber auch ein Gerät sein. Alternativ kann die erste Partei auch ein Dokument oder eine Information sein. In einem Authentifizierungsverfahren authentisiert sich die erste Partei gegenüber der zweiten Partei.

Ihre Authentifizierung kann eine erste Partei beispielsweise erreichen, indem sie die Kenntnis einer Information, zum Beispiel eines Passwortes, nachweist, indem sie in Besitz eines Gegenstands, zum Beispiel eines Schlüssels, ist oder indem sie selbst anwesend ist und ein überprüfbares biometrisches Merkmal, zum Beispiel einen Fingerabdruck, zur Verfügung stellt oder sich nachweislich an einem bestimmten Ort befindet.

Die Authentifizierung von Benutzern, Geräten und Diensten stellt eine der wichtigsten Funktionen zur Sicherung einer Kommunikation dar. Nur durch eine vorangegangene Authentifizierung ist ein vertrauenswürdiger Datenaustausch, zum Beispiel im Online-Banking, möglich. Die Art und Weise, wie eine Authentifizierung erfolgt, wird durch so genannte Authentifizierungsprotokolle beschrieben. Es existiert eine Vielzahl unterschiedlicher Authentifizierungsprotokolle, die an die jeweilige Anwendung oder unterschiedliche Kommunikationsprotokolle angepasst sind.

Auf Grund stetig wachsender Anforderungen, zum Beispiel bezüglich des Datenschutzes, und des technologischen Fortschritts, zum Beispiel im Bereich der Kryptographie und der Chipkartentechnologie, werden fortlaufend weitere Authentifizierungsprotokolle entwickelt.

Herkömmliche Authentifizierungsmechanismen werden von unterschiedlichsten Systemen, wie zum Beispiel Bankautomaten und Online-Diensten, verwendet. Es ist bekannt, Anwendungssysteme mittels geeigneter Schnittstellen von den spezialisierten Authentifizierungsmodulen beziehungsweise der Benutzerumgebung zu entkoppeln. Ferner ist es üblich, verteilte Authentifizierungssysteme zu realisieren, bei denen eine anwendungsnahe "Service Provider"-Komponente über Webservice-Schnittstellen mit einem spezialisierten "Identity Provider"-Dienst (IdP-Dienst) kommuniziert, um die Authentifizierung von Benutzern an diesen IdP-Dienst zu delegieren. Ein IdP-Dienst bestätigt gegenüber dem "Service Provider" die Identität eines Benutzers, sofern sich dieser gegenüber dem IdP-Dienst authentifiziert hat, und stellt dem Benutzer eine digitale Identität aus. Mit Hilfe dieser IdP-Dienste können auch so genannte "Single Sign-On"-Verfahren (SSO) realisiert werden. SSO-Verfahren sind Verfahren, die dazu dienen, einem Benutzer den Umgang mit unterschiedlichen Online-Diensten, welche eine Authentifizierung erfordern, zu erleichtern. Authentifiziert sich der Benutzer gegenüber dem IdP-Dienst über einen bestimmten Online-Dienst, der ein SSO-Verfahren unterstützt, kann dieser Benutzer weitere Online-Dienste nutzen, die eine Authentifizierung erfordern und das gleiche SSO-Verfahren unterstützen, ohne eine erneute Authentifizierung für jeden einzelnen Online-Dienst durchführen zu müssen. Der IdP-Dienst bestätigt, ohne eine weitere Authentifizierung, die Identität des Benutzers auch gegenüber den weiteren Online-Diensten, die dieser Benutzer nutzen möchte.

Falls eine Anwendung oder ein IdP-Dienst um ein neues Authentifizierungsprotokoll erweitert wird, so wird üblicherweise ein neues Programmmodul entwickelt, welches das neue Authentifizierungsprotokoll abbildet und das in die jeweilige Anwendung oder den IdP-Dienst integriert werden muss.

Die Erstellung eines neuen Programmmoduls zur Integration eines neu entwickelten Authentifizierungsprotokolls erfordert jedoch tiefgreifende Kenntnisse kryptographischer Verfahren und der Programmierung und ist daher zeitintensiv und aufwändig.

Die US 2006 / 0 053 124 A1 offenbart ein System, bei welchem eine Vielzahl von Web-Services und eine Vielzahl von Authentisierungsdiensten bereitgestellt werden und ein Broker die Web-Services freigibt, wenn ein Benutzer durch den entsprechenden Authentisierungsdienst authentisiert wurde.

Die US 2008 / 0 196 089 A1 zeigt ein Authentisierungsframework, welches EAP-Methoden von dem Vorgang der Authentisierung trennt.

Die EP 1 930 836 A1 zeigt einen Anwendungsserver, auf welchem eine Prozessverarbeitungseinrichtung ausgeführt wird, welche Sicherheitsdienste nutzen kann.

### ZUSAMMENFASSUNG DER ERFINDUNG

Vor diesem Hintergrund ist es eine Aufgabe der vorliegenden Erfindung ein System zur Verfügung zu stellen, mit dem es möglich ist, effizient neue Authentifizierungsprotokolle in eine vorhandene Anwendung oder einen vorhandenen IdP-Dienst zu integrieren.

Die Erfindung schafft demgemäß eine Authentifizierungsvorrichtung zur Authentifizierung anhand von unterschiedlichen Typen von Authentifizierungsprotokollen mit mindestens einer Netzwerkschnittstelle, über die die Authentifizierungsvorrichtung mit mindestens einem Datennetzwerk koppelbar ist und welche dazu ausgelegt ist, eine Authentifizierungsanfrage zu empfangen und ein Authentifizierungsergebnis auszugeben, mit einer Bereitstellungsvorrichtung, die derart ausgebildet ist, eine generische Prozessablaufumgebung, mindestens eine authentifizierungsprotokollspezifische Prozessbeschreibung und mindestens einen Authentifizierungsbasisdienst bereit zu stellen, wobei für jeden unterschiedlichen Typ eines Authentifizierungsprotokolls, das mehrere Einzelschritte und die Kommunikation mit mindestens einem Authentisierungstoken umfasst, die entsprechende gespeicherte authentifizierungsprotokollspezifische Prozessbeschreibung auf die zugehörigen Authentifizierungsbasisdienste des jeweiligen Authentifizierungsprotokolls verweist und mit einer Berechnungseinrichtung, welche einen der Authentifizierungsanfrage entsprechenden Authentifizierungsprozess auf Basis der authentifizierungsprotokollspezifischen Prozessbeschreibung innerhalb der generischen Prozessablaufumgebung und die zugehörigen Authentifizierungsbasisdienste zur Berechnung des Authentifizierungsergebnisses ausführt, wobei eine authentifizierungsprotokollspezifische Prozessbeschreibung aus mehreren Einzelschritten besteht, in denen jeweils eine zu sendende Kommandonachricht durch Aufruf von mindestens einem Authentifizierungsbasisdienst erzeugt wird.

Die Erfindung schafft ferner ein Verfahren zur Authentifizierung mit unterschiedlichen Typen von Authentifizierungsprotokollen, mit mehreren Schritten, nämlich Bereitstellen einer generischen Prozessablaufumgebung, mindestens einer authentifizierungsprotokollspezifischen Prozessbeschreibung und mindestens eines Authentifizierungsbasisdienstes, wobei für jeden unterschiedlichen Typ eines Authentifizierungsprotokolls, das mehrere Einzelschritte und die Kommunikation mit mindestens einem Authentisierungstoken umfasst, eine entsprechende gespeicherte authentifizierungsprotokollspezifische Prozessbeschreibung auf die zugehörigen Authentifizierungsbasisdienste des jeweiligen Authentifizierungsprotokolls verweist, Empfangen mindestens einer Authentifizierungsanfrage von einem Client, Ausführen eines der Authentifizierungsanfrage entsprechenden Authentifizierungsprozesses innerhalb der generischen Prozessablaufumgebung mittels der authentifizierungsprotokollspezifischen Prozessbeschreibung und der Authentifizierungsbasisdienste und Erzeugen eines Authentifizierungsergebnisses wobei eine authentifizierungsprotokollspezifische Prozessbeschreibung aus mehreren Einzelschritten besteht, in denen jeweils eine zu sendende Kommandonachricht durch Aufruf von mindestens einem Authentifizierungsbasisdienst erzeugt wird, und Übermitteln des Authentifizierungsergebnisses der Authentifizierung an den Client.

Die, der vorliegenden Erfindung zu Grunde liegende Erkenntnis besteht darin, dass allen Authentifizierungsprotokollen eine Menge an Authentifizierungsbasisdiensten gemeinsam ist, wobei jedes dieser Authentifizierungsprotokolle die Authentifizierungsbasisdienste unterschiedlich verknüpft. Unter Authentifizierungsbasisdiensten sind Dienste zu verstehen, die eine Teilaufgabe eines Authentifizierungsprozesses, wie zum Beispiel die Berechnung einer kryptographischen Prüfsumme nach einem bestimmten Verfahren, erfüllen. Diese Authentifizierungsbasisdienste können, sofern sie einmal bereitgestellt wurden, von unterschiedlichsten Authentifizierungsprozessen und in verschiedenen Authentifizierungsprotokollen wiederverwendet werden.

Die, der vorliegenden Erfindung zu Grunde liegende Idee basiert nun darauf, dieser Erkenntnis Rechnung zu tragen und einen IdP-Dienst mit einer Prozessablaufumgebung bereit zu stellen, die es ermöglicht Prozessbeschreibungen abzuarbeiten und eine Menge an Authentifizierungsbasisdiensten bereitzustellen, die ein Authentifizierungsprozess, welcher ein spezifisches Authentifizierungsprotokoll abbildet und welcher innerhalb der Prozessablaufumgebung abgearbeitet wird, nutzen kann.

Mittels dieser Prozessablaufumgebung und der Authentifizierungsbasisdienste ist es möglich, in einfacher Weise ein neu entwickeltes Authentifizierungsprotokoll in den IdP-Dienst aufzunehmen.

Um ein neu entwickeltes Authentifizierungsprotokoll in den IdP-Dienst aufzunehmen ist es lediglich notwendig, das neue Authentifizierungsprotokoll in der Prozessbeschreibungssprache der Prozessablaufumgebung zu beschreiben bzw. anzugeben und die bereitgestellten Authentifizierungsbasisdienste innerhalb dieser Authentifizierungsprozessbeschreibung zu referenzieren. Zur Erstellung der Authentifizierungsprozessbeschreibung sind lediglich Kenntnisse der Prozessbeschreibungssprache, zum Beispiel einer anwendungsspezifischen Modellierungssprache oder einer generischen XML-basierten Prozessbeschreibungssprache wie BPEL, notwendig. Programmierkenntnisse einer Programmiersprache oder Kenntnisse kryptographischer Verfahren sind zur Erstellung dieser Prozessbeschreibungen nicht notwendig. Neu entwickelte Authentifizierungsprotokolle können somit schnell und effizient in den IdP-Dienst aufgenommen werden.

Vorteilhafte Ausgestaltungen und Weiterbildungen ergeben sich aus den Unteransprüchen sowie aus der Beschreibung unter Bezugnahme auf die Figuren.

In einer bevorzugten Ausgestaltung umfassen die Authentifizierungsbasisdienste einzelne Dienste, welche zur Ausführung unterschiedlicher Authentifizierungsprozesse vorgegeben sind. In einer alternativen Ausgestaltungsform umfassen die Authentifizierungsbasisdienste Bibliotheksfunktionen.

Dadurch, dass sich in unterschiedlichen Authentifizierungsprozessen wiederholende Aufgaben in Authentifizierungsbasisdiensten zusammengefasst werden, können diese einfach wiederverwendet werden. Weiterhin wird der Speicherbedarf für unterschiedliche Authentifizierungsprozesse verringert, da Anwender die Authentifizierungsbasisdienste nicht selbst implementieren müssen.

In einer möglichen Ausgestaltung ist die Berechnungseinrichtung dazu ausgebildet, innerhalb der bereitgestellten generische Prozessablaufumgebung beschriebene Authentifizierungsprozesse, insbesondere in einer anwendungsspezifischen Mödellierungssprache oder in XML (eXtensible Markup Language) beschriebene Authentifizierungsprozesse, schrittweise auszuführen und dabei Authentifizierungsbasisdienste zur schrittweisen Abarbeitung der Authentifizierungsprozesse zu nutzen. Die Verwendung einer anwendungsspezifischen Modellierungssprache unterstützt die intuitive und benutzerfreundliche Spezifikation von Authentifizierungsprotokollen. Die Nutzung von XML als Beschreibungssprache für Authentifizierungsprozesse bietet hingegen den Vorteil, dass die syntaktische Korrektheit der Syntax leicht geprüft werden kann und dass die beschriebenen Authentifizierungsprozesse in einer standardisierten Sprache beschrieben werden, die auch von anderen Systemen als der generischen Prozessablaufumgebung interpretiert werden kann. Damit kann zum Beispiel ein Kontrollprogramm, welches dazu ausgestaltet ist, in XML formulierte Prozessbeschreibungen zu verarbeiten, die Korrektheit der Prozessbeschreibungen überprüfen.

In einer möglichen Ausführungsform ist die Berechnungseinrichtung dazu ausgestaltet, innerhalb der bereitgestellten generischen Prozessablaufumgebung BPEL - Authentifizierungsprozesse (Business Process Execution Language) schrittweise auszuführen. Da BPEL eine Abwandlung der Sprache XML ist, welche speziell zur Beschreibung von Prozessen entwickelt wurde, können in BPEL beschriebene Prozesse von unterschiedlichen generischen Prozessablaufumgebungen abgearbeitet werden.

In einer Ausgestaltung weist die authentifizierungsprotokollspezifische Prozessbeschreibung Einzelschritte, welche für eine Authentifizierung gemäß des entsprechenden Authentifizierungsprotokolls vorgesehen sind, und eine Abarbeitungsreihenfolge der Einzelschritte auf. Wird ein Authentifizierungsprozess in einzelne Schritte unterteilt, wird es somit möglich in unterschiedlichen Authentifizierungsprozessen wiederkehrende Einzelschritte zu identifizieren und diese als Authentifizierungsbasisdienste bereit zu stellen. Damit wird eine schnelle und effiziente Integration neu entwickelter Authentifizierungsprotokolle durch die Einbindung der Authentifizierungsbasisdienste ermöglicht.

In einer Ausgestaltung ist eine Bereitstellungsvorrichtung vorgesehen, in der die Authentifizierungsbasisdienste und die generische Prozessablaufumgebung in der gleichen Speichereinheit bereitgestellt sind. Alternativ kann die Bereitstellungsvorrichtung auch unterschiedliche getrennte Speichereinheiten aufweisen, in denen die Authentifizierungsbasisdienste und die generische Prozessablaufumgebung gespeichert sind, wobei eine oder mehrere Netzwerkschnittstellen vorgesehen sind, über welche die Speichereinheiten kommunizieren. Die Unterbringung der Authentifizierungsbasisdienste und der generische Prozessablaufumgebung in einer einzigen Bereitstellungsvorrichtung erlaubt es, ein einfaches und damit günstiges System aufzubauen. Auf der anderen Seite erlaubt die Unterbringung der Authentifizierungsbasisdienste und der generische Prozessablaufumgebung in mindestens zwei getrennte Speichereinheiten es, ein flexibles und erweiterbares System anzubieten. Die Speichereinheiten können zum Beispiel Netzwerkserver sein und die Authentifizierungsbasisdienste können zum Beispiel gemäß ihrer Benutzungshäufigkeit auf diese Server verteilt werden. Hierdurch kann insbesondere eine dienstorientierte und besonders gut skalierbare Architektur geschaffen werden.

In einer bevorzugten Ausgestaltung unterstützt der mindestens eine Authentifizierungsbasisdienst zumindest eine der folgenden Funktionen:
- Zugriff auf und Verwaltung von Chipkartenapplikationen,
- Bereitstellung von Zufallszahlen
- Ausführung kryptographischer Operationen,
- Verwaltung und Nutzung von Schlüsselmaterial zur Authentifizierung oder für andere kryptographische Zwecke,
- Zugriff auf Daten, die in einer Chipkartenapplikation gespeichert sind,
- Verwaltung von Berechtigungsinformationen,
- Zugriff auf Daten, die in einem Verzeichnis oder einer Datenbank gespeichert sind,
- Erzeugung und Übermittlung von Chipkartenkömmandos, wie z.B.
   ∘ ACTIVATE FILE
   ∘ ACTIVATE RECORD
   ∘ APPEND RECORD
   ∘ CHANGE REFERENCE DATA
   ∘ CREATE FILE
   ∘ DEACTIVATE FILE
   ∘ DEACTIVATE RECORD
   ∘ DELETE FILE
   ∘ DISABLE VERIFICATION REQUIREMENT
   ∘ ENABLE VERIFICATION REQUIREMENT
   ∘ ENVELOPE
   ∘ ERASE BINARY
   ∘ ERASE RECORD
   ∘ EXTERNAL AUTHENTICATE
   ∘ MUTUAL AUTHENTICATE
   ∘ GENERAL AUTHENTICATE
   ∘ GENERATE ASYMMETRIC KEY PAIR
   ∘ GET CHALLENGE
   ∘ GET DATA
   ∘ GET RESPONSE
   ∘ INTERNAL AUTHENTICATE
   ∘ MANAGE CHANNEL
   ∘ MANAGE SECURITY ENVIRONMENT
   ∘ PERFORM SCQL OPERATION
   ∘ PERFORM SECURITY OPERATION
   ∘ PERFORM TRANSACTION OPERATION
   ∘ PERFORM USER OPERATION
   ∘ PUT DATA
   ∘ READ BINARY
   ∘ READ RECORD(S)
   ∘ RESET RETRY COUNTER
   ∘ SEARCH BINARY
   ∘ SEARCH RECORD
   ∘ SELECT
   ∘ TERMINATE CARD USAGE
   ∘ TERMINATE DF
   ∘ TERMINATE EF
   ∘ TRANSCIPHER
   ∘ UPDATE BINARY
   ∘ UPDATE RECORD
   ∘ VERIFY
   ∘ WRITE BINARY
   ∘ WRITE RECORD
- Zugriff auf lokale und entfernte Chipkartenterminals und Chipkarten und/oder
- Zugriff auf andere Authentisierungstoken oder Endgeräte des Benutzers.

In einer Ausgestaltung sind eine oder mehrere der folgenden authentifizierungsprotokollspezifischen Prozessbeschreibungen (41, 42) vorgesehen (vgl. BSI TR 03112-7, CEN 15480-3, ISO/IEC 24727-3 und ISO/IEC 9798-{2,3,4,5}):
- PIN Compare,
- Extended Access Control (V 1.1 und V 2.0),
- RSA Authentication,
- Mutual Authentication,
- Generic Cryptography,
- Simple Assertion,
- Asymmetric Internal Authenticate,
- Asymmetric External Authenticate,
- Symmetric Internal Authenticate,
- Symmetric External Authenticate,
- Compare,
- Biometric Compare,
- Mutual Authentication with Key Establishment,
- Client-Application Mutual Authentication with Key Establishment,
- Client-Application Asymmetric External Authenticate,
- Modular Extended Access Control Protocol (M-EAC),
- Key Transport with mutual authentication based on RSA,
- Age Attainment,
- Asymmetric Session Key Establishment,
- Secure PIN Compare,
- EC Key Agreement with Card-Application Authentication,
- EC Key Agreement with Mutual Authentication,
- Simple EC-DH Key Agreement,
- GP Asymmetric Authentication,
- GP Symmetric Authentication (Explicit Mode),
- GP Symmetric Authentication (Implicit Mode),
- One-pass unilateral authentication,
- Two-pass unilateral authentication,
- Two-pass mutual authentication,
- Three-pass mutual authentication,
- Two-pass parallel authentication,
- Four pass authentication,
- Five pass authentication,
- Identity Based FS (Fiat / Shamir),
- Identity Based GQ1 (Guillou / Quisquater),
- Integer Factorization GQ2 (Guillou / Quisquater),
- Discrete Logarithms Prime Number SC,
- Discrete Logarithms Composite Number GPS1,
- Discrete Logarithms Composite Number GPS2,
- Unilateral Asymmetric Encipherment,
- Mutual Asymmetric Encipherment.

In einer Ausgestaltung ist die Authentifizierungsvorrichtung als ein Server ausgebildet, welcher die Berechnungseinrichtung und die Bereitstellungsvorrichtung aufweist und welcher dazu ausgebildet ist, die Authentifizierungsanfragen von mindestens einem Client über das Datennetzwerk zu empfangen. Wird die Authentifizierungsvorrichtung als ein Netzwerkserver gestaltet, kann die Authentifizierungseinrichtung flexibel in unterschiedlichen Netzwerken eingesetzt werden.

In einer Ausgestaltung enthält die Authentifizierungsanfrage Informationen über das zu nutzende Authentifizierungstoken und/oder die notwendige Authentifizierungsstufe (Assurance Level), eine bevorzugte Authentifizierungspolicy und/oder das gewünschte Authentifizierungsprotokoll und/oder zusätzlich zwingend notwendige oder gewünschte Benutzerattribute. Dadurch, dass die Authentifizierungsanfrage bereits alle für die Authentifizierung notwendigen Daten enthält, ist bis zum Abschluss der Authentifizierung keine weitere Netzwerkkommunikation notwendig und die Netzwerklast wird gering gehalten.

In einer Ausgestaltung ist das Datennetzwerk das Internet. Wird die Authentifizierungseinrichtung als ein Internet-Server betrieben, wird es möglich jedem Computer, welcher ebenfalls an das Internet gekoppelt ist bzw. jedem elektronischen Endgerät eines Benutzers eine Authentifizierung zur Verfügung zu stellen. Auf diese Weise kann eine Authentifizierung einfach und effizient in eine neu entwickelte Web-Seite integriert werden.

In einer Ausgestaltung weist der Client eine Website auf, welche einen Benutzer authentifiziert. Die Authentifizierung eines Benutzers innerhalb einer Web-Seite stellt eine der häufigsten Arten einer Authentifizierung im Internet dar. Daher ist es vorteilhaft diesen eine zentrale, einfach zu wartende Authentifizierungsvorrichtung zur Verfügung zu stellen.

In einer Ausgestaltung ist der Client derart ausgebildet, die Authentifizierungsanfrage in Form einer AuthnRequest-Nachricht gemäß der Security Assertion Markup Language (SAML) oder einer RequestSecurityToken-Nachricht gemäß WS-Trust oder einer Check-ID-Nachricht gemäß OpenID zu stellen und das Authentifizierungsergebnis in Form einer entsprechenden Assertion zurückzuerhalten, wobei die Assertion durch die Authentifizierungsvorrichtung generiert wird. Durch die Verwendung standardisierter Anfrage- und Antwortelemente kann die Authentifizierungsvorrichtung in eine Vielzahl unterschiedlicher Umgebungen eingesetzt werden. Diese können zum Beispiel das Internet, Gebäude- oder Firmennetzwerke sein.

In einer Ausgestaltung weist die Website einen Online-Shop und/oder einen E-Mail-Anbieter und/oder ein Online-Banking Portal einer Bank und/oder eine Online-Auktion und/oder ein Portal eines sozialen Netzwerkes und/oder eine andere Internet-Seite, welche eine Benutzerauthentifizierung durchführt, auf.

Die obigen Ausgestaltungen und Weiterbildungen lassen sich beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer möglichen Ausführungsform einer erfindungsgemäßen Authentifizierungsvorrichtung,
- Fig. 2: eine erste beispielhafte Topologie mit einer möglichen Ausführungsform einer erfindungsgemäßen Authentifizierungsvorrichtung,
- Fig. 3: eine zweite beispielhafte Topologie mit einer möglichen Ausführungsform einer erfindungsgemäßen Authentifizierungsvorrichtung,
- Fig. 4: eine dritte beispielhafte Topologie mit einer möglichen Ausführungsform einer erfindungsgemäßen Authentifizierungsvorrichtung,
- Fig. 5: ein Ablaufdiagramm einer möglichen Ausführungsform eines erfindungsgemäßen Verfahrens,
- Fig. 6: ein Diagramm zur Erläuterung eines Ausführungsbeispiels einer erfindungsgemäßen Authentifizierungsvorrichtung,
- Fig. 7: ein weiteres Diagramm zur Erläuterung von Details einer möglichen Ausgestaltungsform einer erfindungsgemäßen Authentifzierungsvorrichtung.

In allen Figuren sind gleiche bzw. funktionsgleiche Elemente und Vorrichtungen - sofern nichts Anderes angegeben ist - mit denselben Bezugszeichen versehen worden.

### BESCHREIBUNG VON AUSFÜHRUNGSBEISPIELEN

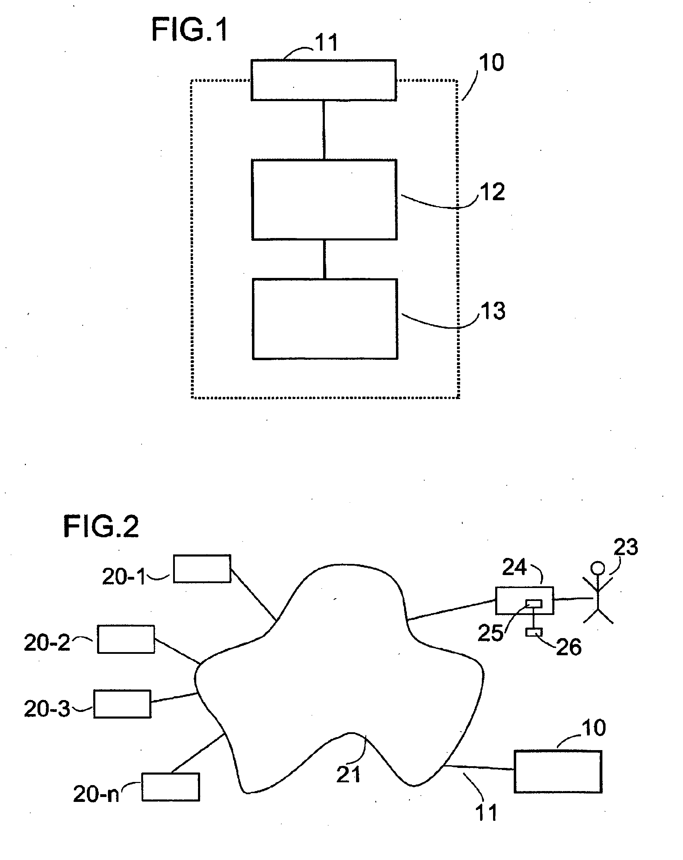

Fig. 1 zeigt ein Blockschaltbild zur Erläuterung einer Ausführungsform einer erfindungsgemäßen Authentifizierungsvorrichtung.

In Fig. 1 ist mit dem Bezugszeichen 10 eine Authentifizierungsvorrichtung dargestellt. Die Authentifizierungsvorrichtung 10 umfasst eine Netzwerkschnittstelle 11 welche mit einer Berechnungseinrichtung 12 verbunden ist. Die Berechnungseinrichtung 12 wiederum ist mit einer Bereitstellungsvorrichtung 13 gekoppelt.

Fig. 2 zeigt eine beispielhafte Topologie eines Netzwerks 21 mit verschiedenen Web-Servern 20-1 bis 20-n, einem Client PC 24 und einer erfindungsgemäßen Authentifizierungsvorrichtung 10. Hierbei kann der Client PC 24 mit geeigneten Schnittstellenkomponenten 25 (z.B. Chipkartenterminals) für den Zugriff auf verschiedenartige Authentifizierungstoken 26 (z.B. Chipkarten) ausgestattet sein.

In Fig. 2 ist das Internet 21 schematisch dargestellt. Eine Vielzahl an Web-Servern 20-1 bis 20-n, die Web-Seiten bereitstellen, sind mit dem Internet 21 verbunden. Ferner ist eine erfindungsgemäße Authentifizierungsvorrichtung 10 über eine Netzwerkschnittstelle 11 an das Internet 21 angebunden und ein PC 24 eines Benutzers 23 ist ebenfalls mit dem Internet 21 gekoppelt.

In diesem Zusammenhang sei darauf hingewiesen, dass bei der in Fig. 2 dargestellten beispielhaften Topologie der Client, der eine Authentifizierungsanfrage an die erfindungsgemäßen Authentifizierungsvorrichtung 10 sendet einer der Web-Server 20-1 bis 20-n ist und nicht der PC 24. Der PC 24 stellt für die Web-Server 20-1 bis 20-n insofern einen Client dar, als das diese Web-Server 20-1 bis 20-n diesem PC Web-Seiten bereitstellen.

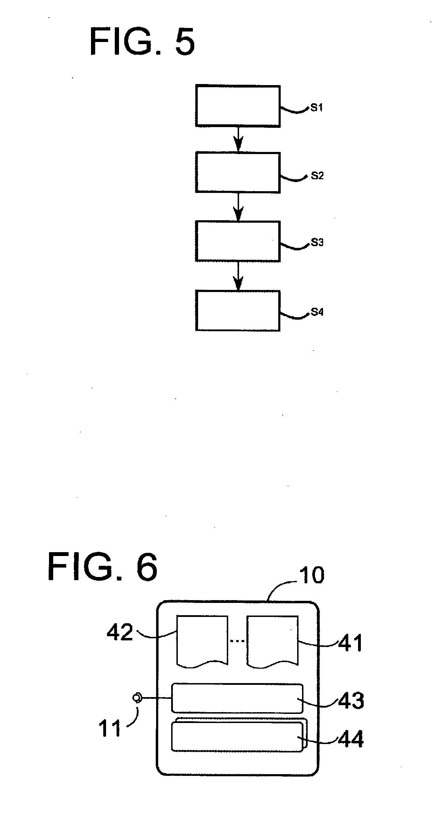

In einem erfindungsgemäßen Ablauf ruft der Benutzer eine Web-Seite von dem Web-Server 20-1 auf, welche eine Authentifizierung erfordert. Hier wird beispielhaft eine Web-Seite des Web-Servers 20-1 aufgerufen. Es sei darauf hingewiesen, dass alternativ auch eine beliebige Web-Seite jedes Web-Servers 20-1 bis 20-n aufgerufen werden kann. Auf den Aufruf hin wird über das Internet 21 eine Kommunikationsverbindung zwischen dem PC 24 und der erfindungsgemäßen Authentifizierungsvorrichtung 10 aufgebaut, über die ein geeignetes Authentifizierungsprotokoll zwischen dem Benutzer 23 bzw. seinem PC 24 bzw. dem Authentifizierungstoken 26 und der Authentifizierungsvorrichtung 10 durchgeführt wird. Welches Authentifizierungsprotokoll hierfür geeignet ist hängt insbesondere vom zur Verfügung stehenden Authentifizierungstoken 26 des Benutzers 23, der geforderten Authentifizierungsstufe oder der bevorzugten Authentifizierungspolicy ab. Die erfindungsgemäße Authentifizierungsvorrichtung 10 verarbeitet die Authentifizierungsanfrage gemäß dem in Fig. 5 dargestellten Ablauf und sendet ein Authentifizierungsergebnis an den Web-Server 20-1 bis 20-n, welcher die Authentifizierungsanfrage gesendet hat. Der Web-Server 20-1 bis 20-n gewährt - im Fall eines positiven Authentifizierungsergebnisses - dem Benutzer Zugriff auf geschützte Dateninhalte oder andere Ressourcen. Fällt das Authentifizierungsergebnis negativ aus, so kann zum Beispiel eine erneute Authentifizierung des Benutzers 23, gegebenenfalls unter Verwendung eines anderen Authentifizierungstokens 26, verlangt werden. Ein System, in welchem ein Web-Server 20-1 bis 20-n zur Authentifizierung eines Benutzers 23 eine Anfrage an eine Authentifizierungsvorrichtung 10 sendet, wird auch als föderiertes System bezeichnet. In solch einem Fall können zur Kommunikation zwischen dem Web-Server 20-1 bis 20-n und der Authentifizierungsvorrichtung 10 auch so genannte Föderationsprotokolle, wie z.B. die Security Assertion Markup Language (SAML), WS-Federation, WS-Trust und/oder OpenID zum Einsatz kommen.

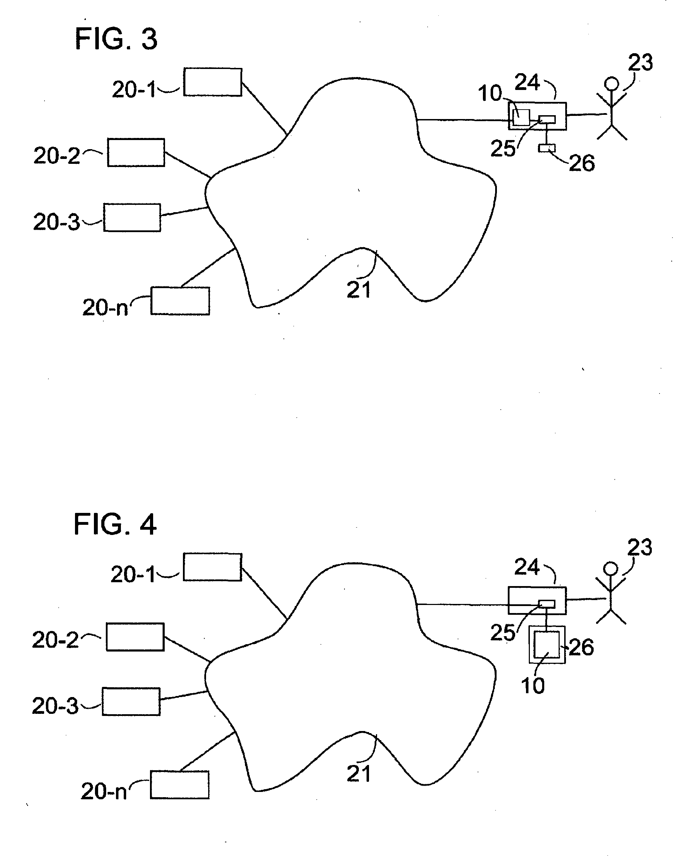

Fig. 3 zeigt eine zweite beispielhafte Topologie, bei der die erfindungsgemäße Authentifizierungsvorrichtung 10 auf dem lokalen System des Benutzers 24 abläuft. In diesem Fall kann die Authentifizierungsanfrage über einen Web-Server 20-1 bis 20-n oder direkt vom lokalen System des Benutzers an die Authentifizierungsvorrichtung 10 übermittelt werden. Das lokale System des Benutzers 24 kann in diesem Fall als PC oder als mobiles Endgerät, beispielsweise als Mobiltelefon, SmartPhone oder als Personal Data Assistant (PDA), ausgeprägt sein. Insbesondere wenn das lokale System des Benutzers als Mobiltelefon ausgeprägt ist, kann die Schnittstellenvorrichtung 25 in das persönliche System des Benutzers integriert sein bzw. entfallen.

Fig. 4 zeigt eine dritte beispielhafte Topologie, bei der die erfindungsgemäße Authentifizierungsvorrichtung 10 direkt in das Authentisierungstoken 26 integriert ist, wodurch eine besonders portable Authentifizierungslösung geschaffen wird.

Fig. 5 zeigt ein Ablaufdiagramm eines möglichen Ablaufs eines erfindungsgemäßen Verfahrens.

In Fig. 5 beginnt das Verfahren zum Authentifizieren mit dem Schritt S1, in dem eine generische Prozessablaufumgebung 43, mindestens eine authentifizierungsprotokollspezifische Prozessbeschreibung 41, 42 und mindestens ein Authentifizierungsbasisdienst 44 bereitgestellt wird. Das Verfahren setzt sich in dem Schritt S2 fort, in dem eine Authentifizierungsanfrage von einem Client beispielsweise einem Web-Server 20-1 bis 20-n empfangen wird. Danach wird in dem Schritt S3 ein Authentifizierungsprozess ausgeführt und ein Authentifizierungsergebnis erzeugt. Schließlich wird in dem Schritt S4 das Authentifizierungsergebnis an den Client gesendet.

Die in S1 bereitgestellte generische Prozessablaufumgebung 43 ist eine Prozessablaufumgebung, die Prozesse gemäß einer Prozessbeschreibung abarbeiten kann. Diese Prozessbeschreibung kann zum Beispiel in einer anwendungsspezifischen Modellierungssprache oder in einer generischen XML-basierten Prozessbeschreibungssprache wie BPEL (Business Process Execution Language) formuliert sein. Empfängt die erfindungsgemäße Authentifizierungsvorrichtung 10 eine Authentifizierungsanfrage von einem Client, beginnt die generische Prozessablaufumgebung 43 damit, die authentifizierungsprotokollspezifische Prozessbeschreibung 41, 42 Schritt für Schritt abzuarbeiten. Dabei sind Einzelschritte, die in unterschiedlichen Authentifizierungsverfahren wiederholt auftreten als Authentifizierungsbasisdienste 44 bereitgestellt. Das bedeutet, dass die generische Prozessablaufumgebung 43 für einen Einzelschritt, der als Authentifizierungsbasisdienst 44 bereitgestellt ist, diesem, die für diesen Schritt notwendigen Daten übermittelt und von diesem nach der Durchführung des Arbeitsschritts Daten, welche das Ergebnis dieses Arbeitsschritts enthalten, empfängt. Hat die generische Prozessablaufumgebung 43 die authentifizierungsprotokollspezifische Prozessbeschreibung 41, 42 bis zu dem letzten Schritt abgearbeitet, steht ein Authentifizierungsergebnis fest. Dieses Authentifizierungsergebnis wird in dem Schritt S4 an den Client, welcher die Authentifizierungsanfrage gesendet hat, übermittelt. Bei der verwendeten Prozessablaufumgebung 43 kann es sich zum Beispiel um eine der folgenden Prozessablaufumgebungen handeln: Apache Tomcat, JBoss, Oracle Weblogic, IBM Websphere, Sun Glassfish Enterprise Server, jBPM, Twister, Apache ODE, BPEL-SE, Active VOS, Oracle BPEL-Process Manager, SAP Exchange Infrastructure, WebSphere Process Server, Microsoft BizTalk Server, Java Runtime Environment oder eine Open Terminal Architecture (OTA) Virtual Machine gemäß ISO/IEC 20600.

Fig. 6 zeigt ein Diagramm zur Erläuterung eines Ausführungsbeispiels einer erfindungsgemäßen Authentifizierungsvorrichtung.

In Fig. 6 ist mit dem Bezugszeichen 10 die erfindungsgemäße Authentifizierungsvorrichtung dargestellt. Diese Authentifizierungsvorrichtung 10 umfasst eine generische Prozessablaufumgebung 43, mindestens einen Authentifizierungsbasisdienst 44 und eine Vielzahl von authentifizierungsprotokollspezifischen Prozessbeschreibungen 41, 42 in Form von Konfigurationsdateien oder Programmmodulen. Ferner umfasst der Server 10 eine Netzwerkschnittstelle 11, beispielsweise eine Ethernetschnittstelle.

In einer alternativen Ausgestaltungsform kann der Server 10 eine Vielzahl von Authentifizierungsbasisdiensten 44 umfassen. In einer noch weiteren Ausgestaltung können die verschiedenen Programmmodule auf mehr als einen Server verteilt sein, die untereinander über ein geeignetes Netzwerk kommunizieren.

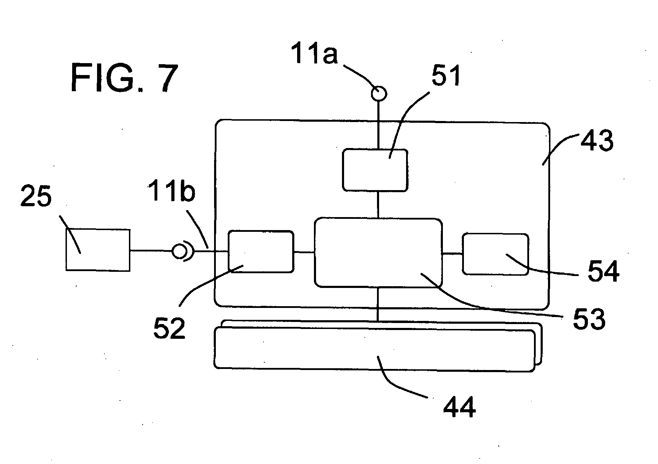

Fig. 7 stellt weitere Details zum Aufbau der Prozessablaufumgebung 43 bereit. Insbesondere ist hierbei ersichtlich, dass die Schnittstelle 11 aus zwei logischen Schnittstellen 11a und 11b besteht. Während die eingehende Schnittstelle 11a dazu genutzt wird, den Authentifizierungsvorgang anzustoßen und das Ergebnis zurück zu übermitteln, dient die ausgehende Schnittstelle 11b dazu, Kommandonachrichten an die Schnittstellenkomponente 25 bzw. das Authentisierungstoken 26 zu schicken. Nach dem Anstoßen des Authentifizierungsvorgangs über die Schnittstelle 11a wird von einer Steuerungskomponente ein dem auszuführenden Authentifizierungsprotokoll entsprechender Ablaufauftrag (Job) erzeugt, der in der Ablaufumgebung 53 abgearbeitet wird. Die Abarbeitung stützt sich auf eine Komponente zur Zustandsverwaltung 54 sowie geeignete Basisdienste 44 und übermittelt die im Zuge der Abarbeitung des Ablaufauftrages erzeugten Kommandonachrichten an eine Proxy-Komponente 52. Diese Proxy-Komponente leitet die erzeugten Kommandonachrichten schließlich an geeignete, lokal oder entfernt befindliche Schnittstellenkomponenten 25 weiter.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar.

Insbesondere können in einer alternativen Ausgestaltungsform die Schnittstellen zwischen einzelnen Komponenten der Authentifizierungsvorrichtung 10 auf Basis von Standards, insbesondere dem internationalen Standard ISO/IEC 24727, realisiert werden. Dies hat den Vorteil, dass beliebige ISO/IEC 24727 konforme Komponenten zur Realisierung der Authentifizierungsbasisdienste 44 und der generischen Prozessablaufumgebung 43 genutzt werden können.

Es sei darauf hingewiesen, dass der Begriff Schnittstelle sich hier nicht nur auf eine Hardwareschnittstelle, sondern sich auch auf eine Schnittstelle zwischen Programmmodulen bezieht.

In einer weiteren alternativen Ausgestaltungsform wird auf die Basisdienste über kryptographische Schnittstellen wie JCA/JCE, PKCS#11 oder MS-CAPI oder Chipkarten-spezifische Schnittstellen wie die Java Smart Card I/O oder PC/SC zugegriffen.

Ferner kann in einer bevorzugten Ausgestaltungsform die Kommunikation zwischen der erfindungsgemäßen Authentifizierungsvorrichtung 10 und dem lokalen Gerät des Benutzers 24 über SOAP- bzw. PAOS-basierte Webservices vermittelt werden.

In noch einer weiteren alternativen Ausgestaltungsform wird die authentifizierungsprotokollspezifische Prozessbeschreibung 41, 42 durch eine anwendungsspezifische Modellierungssprache oder durch konventionelle Programmiersprachen, wie zum Beispiel Java, LISP, C, C++ oder C#, oder durch konventionelle Interpretersprachen, wie zum Beispiel BASIC, Perl, Ruby, Python oder PHP, oder durch konventionelle Skriptsprachen, wie zum Beispiel JavaScript, VBScript, Clojure, Groovy, JRuby oder Jython, spezifiziert.

### Bezugszeichenliste

- 10: Authentifizierungsvorrichtung
- 11: Netzwerkschnittstelle
- 11a: eingehende logische Schnittstelle
- 11b: ausgehende logische Schnittstelle
- 12: Berechnungseinrichtung
- 13: Bereitstellungsvorrichtung

- 20-1: Web-Server
- 20-2: Web-Server
- 20-3: Web-Server
- 20-n: Web-Server
- 21: Internet
- 23: Benutzer
- 24: Client PC
- 25: Schnittstellenkomponente
- 26: Authentisierungstoken

- 41: authentifizierungsprotokollspezifische Prozessbeschreibung
- 42: authentifizierungsprotokollspezifische Prozessbeschreibung
- 43: generische Prozessablaufumgebung
- 44: Authentifizierungsbasisdienst

- 51: Steuerungseinheit
- 52: Proxy-Komponente
- 53: Ausführungsumgebung für Ablaufauftrag (Job)
- 54: Zustandsverwaltung

- S1: Prozessschritt
- S2: Prozessschritt
- S3: Prozessschritt

## Patentansprüche

1. Authentifizierungsvorrichtung (10) zur Authentifizierung anhand von unterschiedlichen Typen von Authentifizierungsprotokollen:
mit mindestens einer Netzwerkschnittstelle (11), über die die Authentifizierungsvorrichtung (10) mit mindestens einem Datennetzwerk (21) koppelbar ist und welche dazu ausgelegt ist, eine Authentifizierungsanfrage zu empfangen und ein Authentifizierungsergebnis auszugeben;
mit einer Bereitstellungsvorrichtung (13), die derart ausgebildet ist, eine generische Prozessablaufumgebung (43), mindestens eine authentifizierungsprotokollspezifische Prozessbeschreibung (41, 42) und mindestens einen Authentifizierungsbasisdienst (44) bereit zu stellen, wobei für jeden unterschiedlichen Typ eines Authentifizierungsprotokolls, das mehrere Einzelschritte und die Kommunikation mit mindestens einem Authentisierungstoken umfasst, die entsprechende gespeicherte authentifizierungsprotokollspezifische Prozessbeschreibung (41, 42) auf die zugehörigen Authentifizierungsbasisdienste (44) des jeweiligen Authentifizierungsprotokolls verweist; und
mit einer Berechnungseinrichtung (12), welche einen der Authentifizierungsanfrage entsprechenden Authentifizierungsprozess auf Basis der Authentifizierungsprotokollspezifischen Prozessbeschreibung (41, 42) innerhalb der generischen Prozessablaufumgebung (43) und die zugehörigen Authentifizierungsbasisdienste (44) zur Berechnung des Authentifizierungsergebnisses ausführt, **dadurch gekennzeichnet, daß** eine authentifizierungsprotokollspezifische Prozessbeschreibung (41, 42) aus mehreren Einzelschritten besteht, in denen jeweils eine zu sendende Kommandonachricht durch Aufruf von mindestens einem Authentifizierungsbasisdienst erzeugt wird.

2. Authentifizierungsvorrichtung (10) gemäß Anspruch 1,
**dadurch gekennzeichnet,**
**dass** die Authentifizierungsbasisdienste einzelne Dienste umfassen, welche zur Ausführung unterschiedlicher Authentifizierungsprozesse vorgegeben sind.

3. Authentifizierungsvorrichtung (10) nach einem der vorherigen Ansprüche,
**dadurch gekennzeichnet,**
**dass** Berechnungseinrichtung (12) dazu ausgebildet ist, innerhalb der bereitgestellten generische Prozessablaufumgebung (43) beschriebene Authentifizierungsprozesse, insbesondere in einer anwendungsspezifischen Modellierungssprache oder in XML, eXtensible Markup Language, beschriebene Authentifizierungsprozesse, schrittweise auszuführen und dabei Authentifizierungsbasisdienste (44) zur schrittweisen Abarbeitung der Authentifizierungsprozesse zu nutzen.

4. Authentifizierungsvorrichtung (10) nach Anspruch 3,
**dadurch gekennzeichnet,**
**dass** die Berechnungseinrichtung (12) dazu ausgestaltet ist, innerhalb der bereitgestellten generische Prozessablaufumgebung (43) BPEL - Authentifizierungsprozesse, Business Process Execution Language, schrittweise auszuführen.

5. Authentifizierungsvorrichtung (10) nach einem der vorherigen Ansprüche,
**dadurch gekennzeichnet,**
**dass** die authentifizierungsprotokollspezifische Prozessbeschreibung (41, 42) Einzelschritte, welche für eine Authentifizierung gemäß des entsprechenden Authentifizierungsprotokolls vorgesehen sind, und eine Abarbeitungsreihenfolge der Einzelschritte aufweist.

6. Authentifizierungsvorrichtung (10) nach einem der vorherigen Ansprüche,
**dadurch gekennzeichnet,**
**dass** eine einzige Bereitstellungsvorrichtung (13) vorgesehen ist, in der die Authentifizierungsbasisdienste (44) und die generische Prozessablaufumgebung (43) in der gleichen Speichereinheit bereitgestellt sind; oder
**dass** die Bereitstellungsvorrichtung (13) unterschiedliche getrennte Speichereinheiten aufweist, in denen die Authentifizierungsbasisdienste (44) und die generische Prozessablaufumgebung (43) gespeichert sind, wobei eine oder mehrere Netzwerkschnittstellen vorgesehen sind, über welche die Speichereinheiten kommunizieren.

7. Authentifizierungsvorrichtung (10) nach einem der vorherigen Ansprüche,
**dadurch gekennzeichnet,**
**dass** die Authentifizierungsvorrichtung (10) als ein Server ausgebildet ist, welcher die Berechnungseinrichtung (12) aufweist und welcher dazu ausgebildet ist, die Authentifizierungsanfragen von mindestens einem Client über das Datennetzwerk (21) zu empfangen, insbesondere bei dem die Authentifizierungsanfrage Informationen über das zu nutzende Authentifizierungstoken, die notwendige Authentifizierungsstufe, die bevorzugte Authentifizierungspolicy, das gewünschte Authentifizierungsprotokoll und / oder zusätzlich zwingend notwendige oder gewünschte Benutzerattribute enthält.

8. Authentifizierungsvorrichtung (10) gemäß Anspruch 7,
**dadurch gekennzeichnet, dass**
der Client eine Website bereitstellt, welche einen Benutzer authentifiziert.

9. Authentifizierungsvorrichtung (10) gemäß einem der Ansprüche 7 bis 8,
**dadurch gekennzeichnet, dass** der Client derart ausgebildet ist, die Authentifizierungsanfrage in Form einer AuthnRequest-Nachricht gemäß der Security Assertion Markup Language oder einer RequestSecurityToken-Nachricht gemäß WS-Trust oder einer Check-ID-Nachricht gemäß OpenID zu stellen und das Authentifizierungsergebnis in Form einer entsprechenden Assertion zurückzuerhalten, wobei die Assertion durch die Authentifizierungsvorrichtung (10) generiert wird.

10. Authentifizierungsvorrichtung (10) gemäß Anspruch 8 oder 9,
wobei die bereitgestellte Website einen Online-Shop und/oder einen E-Mail-Anbieter und/oder ein Online-Banking Portal einer Bank und/oder eine Online-Auktion und/oder eine andere Internet-Seite, welche eine Benutzerauthentifizierung durchführt, aufweist.

11. Authentifizierungsvorrichtung (10) nach einem der Ansprüche 1 bis 7,
**dadurch gekennzeichnet,**
**dass** die Authentifizierungsvorrichtung (10) in das lokale System (24) des Benutzers (23) integriert ist oder in das Authentisierungstoken (26) des Benutzers (23) integriert ist.

12. Verfahren zum Authentifizieren mit unterschiedlichen Typen von Authentifizierungsprotokollen, mit den Schritten:
a) Bereitstellen (S1) einer generischen Prozessablaufumgebung (43), mindestens einer authentifizierungsprotokollspezifischen Prozessbeschreibung (41, 42) und mindestens eines Authentifizierungsbasisdienstes (44), wobei für jeden unterschiedlichen Typ eines Authentifizierungsprotokolls, das mehrere Einzelschritte und die Kommunikation mit mindestens einem Authentisierungstoken umfasst, eine entsprechende gespeicherte authentifizierungsprotokollspezifische Prozessbeschreibung (41, 42) auf die zugehörigen Authentifizierungsbasisdienste (44) des jeweiligen Authentifizierungsprotokolls verweist;
b) Empfangen (S2) mindestens einer Authentifizierungsanfrage von einem Client;
c) Ausführen (S3) eines der Authentifizierungsanfrage entsprechenden Authentifizierungsprozesses innerhalb der generischen Prozessablaufumgebung (43) mittels der authentifizierungsprotokollspezifischen Prozessbeschreibung (41, 42) und der Authentifizierungsbasisdienste (44) und Erzeugen eines Authentifizierungsergebnisses ausführt, wobei eine authentifizierungsprotokollspezifische Prozessbeschreibung (41, 42) aus mehreren Einzelschritten besteht, in denen jeweils eine zu sendende Kommandonachricht durch Aufruf von mindestens einem Authentifizierungsbasisdienst erzeugt wird; und
d) Übermitteln des Authentifizierungsergebnisses der Authentifizierung an den Client.

13. Verfahren gemäß Anspruch 12,
mit den zusätzlichen Schritten,
Schrittweises Ausführen von Authentifizierungsprozessen, insbesondere von in einer applikationsspezifischen Modellierungssprache oder in XML beschriebenen Authentifizierungsprozesse, durch die gespeicherte generische Prozessablaufumgebung (43); und
Ausführen der Authentifizierungsbasisdienste (44) zur Abarbeitung von Einzelschritten der Authentifizierungsprozesse.

14. Verfahren gemäß einem der vorherigen Verfahrensansprüche,
**dadurch gekennzeichnet,**
**dass** die gespeicherte generische Prozessablaufumgebung (43) BPEL, Business Process Execution Language, Prozesse schrittweise ausführt.

## Claims

1. Authentication device (10) for authentication using different types of authentication protocols:
comprising at least one network interface (11), via which the authentication device (10) can be coupled to at least one data network (21) and which is configured to receive an authentication query and to output an authentication result;
comprising a preparation device (13), which is formed so as to prepare a generic process execution environment (43), at least one authentication-protocol-specific process description (41, 42) and at least one authentication base service (44), the corresponding stored authentication-protocol-specific process description (41, 42) referencing the associated authentication base service (44) of the respective authentication protocol for each different type of authentication protocol, which comprises a plurality of individual steps and communication with at least one authentication token; and
comprising a calculation device (12), which executes an authentication process, corresponding to the authentication query, on the basis of the authentication-protocol-specific process description (41, 42) within the generic process execution environment (43), and the associated authentication base service (44) for calculating the authentication result,
**characterised in that**
an authentication-protocol-specific process description (41, 42) consists of a plurality of individual steps, in each of which a command message to be sent is generated by calling at least one authentication base service.

2. Authentication device (10) according to claim 1,
**characterised in that**
the authentication base services comprise individual services which are provided for executing different authentication processes.

3. Authentication device (10) according to either of the proceeding claims,
**characterised in that**
the calculation device (12) is formed so as to execute iteratively authentication processes described within the provided generic process execution environment (43), in particular authentication processes described in an application-specific modelling language or in XML, extensible markup language, and in doing so to use authentication base services (44) for iteratively implementing the authentication processes.

4. Authentication device (10) according to claim 3,
**characterised in that**
the calculation device (12) is configured to execute iteratively BPEL, business process execution language, authentication processes within the provided generic process execution environment (43).

5. Authentication device (10) according to any of the preceding claims,
**characterised in that**
the authentication-protocol-specific process description (41, 42) comprises individual steps, which are provided for authentication in accordance with the corresponding authentication protocol, and an execution sequence for the individual steps.

6. Authentication device (10) according to any of the preceding claims,
**characterised in that**
a single preparation device (13) is provided, in which the authentication base services (44) and the generic process execution environment (43) are provided in the same storage unit; or
**in that** the preparation device (13) comprises different separate storage units in which the authentication base services (44) and the generic process execution environment (43) are stored, one or more network interfaces being provided via which the storage units communicate.

7. Authentication device (10) according to any of the preceding claims,
**characterised in that**
the authentication device (10) is formed as a server, which comprises the calculation device (12) and which is formed to receive the authentication queries from at least one client via the data network (21), in particular in which the authentication query obtains information regarding the authentication to be used, the required authentication level, the preferred authentication policy and/or additionally required or desired user attributes.

8. Authentication device (10) according to claim 7,
**characterised in that**
the client provides a web page which authenticates a user.

9. Authentication device (10) according to any of claims 7 to 8,
**characterised in that** the client is formed so as to make the authentication query in the form of an AuthnRequest message in accordance with Security Assertion Markup Language or a RequestSecurityToken message in accordance with WS-Trust or a Check-ID message in accordance with OpenID, and to retrieve the authentication result in the form of a corresponding assertion, the assertion being generated by the authentication device (10).

10. Authentication device (10) according to either claim 8 or claim 9,
wherein the provided web page comprises an online shop and/or an e-mail provider and/or an online banking portal of a bank and/or an online auction and/or another Web page which carries out user authentication.

11. Authentication device (10) according to any of claims 1 to 7,
**characterised in that**
the authentication device (10) is integrated into the local system (24) of the user (23) or into the authentication token (26) of the user (23).

12. Method for authentication using different types of authentication protocols, comprising the steps of:
a) providing (S1) a generic process execution environment (43), at least one authentication-protocol-specific process description (41, 42) and at least one authentication base service (44), the corresponding stored authentication-protocol-specific process description (41, 42) referencing the associated authentication base service (44) of the respective authentication protocol for each different type of authentication protocol, which comprises a plurality of individual steps and communication with at least one authentication token;
b) receiving (S2) at least one authentication query from a client;
c) executing (S3) an authentication process, corresponding to the authentication query, by means of the authentication-protocol-specific process description (41, 42) and the authentication base services (44) within the generic process execution environment (43), and generating an authentication result, an authentication-protocol-specific process description (41, 42) consisting of a plurality of individual steps, in each of which a command message to be sent is generated by calling at least one authentication base service; and
d) conveying the authentication result of the authentication to the client.

13. Method according to claim 12,
comprising the additional steps of
executing iteratively authentication processes, in particular authentication processes described in an application-specific modelling language or in XML, using the stored generic process execution environment (43); and
executing the authentication base services (44) for executing individual steps of the authentication processes.

14. Method according to any of the preceding claims,
**characterised in that**
the stored generic process execution environment (43) iteratively executes BPEL, business process execution language, processes.

## Revendications

1. Dispositif d'authentification (10) destiné à l'authentification au moyen de différents types de protocoles d'authentification :
comportant au moins une interface réseau (11), par l'intermédiaire de laquelle le dispositif d'authentification (10) peut être couplé à au moins un réseau de données (21) et qui est conçue pour recevoir une demande d'authentification et émettre un résultat d'authentification ;
comportant un dispositif de fourniture (13), réalisé de manière à fournir un environnement de déroulement de processus (43) générique, au moins une description de processus spécifique au protocole d'authentification (41, 42) et au moins un service de base d'authentification (44), pour chaque différent type d'un protocole d'authentification, qui comprend plusieurs étapes individuelles et la communication avec au moins un jeton d'authentification, la description de processus (41, 42) correspondante stockée spécifique au protocole d'authentification renvoyant aux services de base d'authentification (44) du protocole d'authentification respectif ; et
comportant un moyen de calcul (12), qui exécute un processus d'authentification correspondant à la demande d'authentification sur la base de la description de processus (41, 42) spécifique au protocole d'authentification au sein de l'environnement de déroulement de processus (43) générique et les services de base d'authentification (44) associés pour le calcul du résultat d'authentification,
**caractérisé par le fait que**
une description de processus (41, 42) spécifique au protocole d'authentification est constituée de plusieurs étapes individuelles, dans lesquelles respectivement un message d'instruction est généré en appelant au moins un service de base d'authentification.

2. Dispositif d'authentification (10) selon la revendication 1,
**caractérisé par le fait que**
les services de base d'authentification comprennent divers services qui sont prédéfinis pour l'exécution de différents processus d'authentification.

3. Dispositif d'authentification (10) selon l'une des revendications précédentes,
**caractérisé par le fait que**
le moyen de calcul (12) est réalisé de manière à exécuter progressivement, au sein de l'environnement de déroulement de processus (43) générique, des processus d'authentification décrits en particulier dans un langage de modélisation spécifique à l'utilisation ou des processus d'authentification décrits en XML, extensible Markup Language tout en utilisant des services de base d'authentification (44) pour le traitement progressif des processus d'authentification.

4. Dispositif d'authentification (10) selon la revendication 3,
**caractérisé par le fait que**
le moyen de calcul (12) est conçu de manière à exécuter progressivement des processus d'authentification BPEL, Business Process Execution Language au sein de l'environnement de déroulement de processus (43) générique fourni.

5. Dispositif d'authentification (10) selon l'une des revendications précédentes,
**caractérisé par le fait que**
la description de processus spécifique au protocole d'authentification (41, 42) présente des étapes individuelles, qui sont prévues pour une authentification selon le protocole d'authentification correspondant, et une séquence de traitement des étapes individuelles.

6. Dispositif d'authentification (10) selon l'une des revendications précédentes,
**caractérisé par le fait que**
un dispositif de fourniture (13) unique est prévu, dans lequel les services de base d'authentification (44) et l'environnement de déroulement de processus (43) générique sont fournis dans la même unité de stockage ; ou que
le dispositif de fourniture (13) présente différentes unités de stockage séparées, dans lesquelles les services de base d'authentification (44) et l'environnement de déroulement de processus (43) générique sont stockés, une ou plusieurs interfaces de réseau étant prévues, par l'intermédiaire desquelles les unités de stockage communiquent.

7. Dispositif d'authentification (10) selon l'une des revendications précédentes,
**caractérisé par le fait que**
le dispositif d'authentification (10) est réalisé sous la forme d'un serveur qui présente le moyen de calcul (12) et qui est conçu de manière à recevoir les demandes d'authentification provenant d'au moins un client par l'intermédiaire du réseau de données (21), en particulier pour lequel la demande d'authentification contient des informations sur le jeton d'authentification à utiliser, le niveau d'authentification nécessaire, la politique d'authentification préférentielle, le protocole d'authentification souhaité et/ou en outre des attributs utilisateur obligatoirement nécessaires ou souhaités.

8. Dispositif d'authentification (10) selon la revendication 7,
**caractérisé par le fait que**
le client fournit un site internet qui authentifie un utilisateur.

9. Dispositif d'authentification (10) selon l'une des revendications 7 à 8,
**caractérisé par le fait que** le client est réalisé de manière à faire la demande d'authentification sous la forme d'un message de demande d'authentification AuthnRequest selon le langage de balisage d'assertion de sécurité SAML ou d'un message de demande de jeton de sécurité RequestSecurityToken selon WS-Trust ou d'un message de contrôle d'identité Check-ID selon OpenID et à récupérer le résultat d'authentification sous la forme d'une assertion correspondante, l'assertion étant générée par le dispositif d'authentification (10).

10. Dispositif d'authentification (10) selon la revendication 8 ou 9,
dans lequel le site web fourni présente une boutique en ligne et/ou un fournisseur de services de courrier électronique et/ou un portail d'e-banking d'une banque et/ou un site d'enchères en ligne et/ou un autre site internet qui exécute une authentification d'utilisateur.

11. Dispositif d'authentification (10) selon l'une des revendications 1 à 7,
**caractérisé par le fait que**
le dispositif d'authentification (10) est intégré dans le système local (24) de l'utilisateur (23) ou est intégré dans le jeton d'authentification (26) de l'utilisateur (23).

12. Procédé d'authentification comportant différents types de protocoles d'authentification, comportant les étapes de :
a) fourniture (S1) d'un environnement de déroulement de processus (43) générique, d'au moins une description de processus (41, 42) spécifique au protocole d'authentification et d'au moins un service de base d'authentification (44), une description de processus (41, 42) correspondante stockée spécifique au protocole d'authentification renvoyant aux services de base d'authentification (44) du protocole d'authentification respectif pour chaque différent type d'un protocole d'authentification, qui comprend plusieurs étapes individuelles et la communication avec au moins un jeton d'authentification ;
b) réception (S2) d'au moins une demande d'authentification provenant d'un client ;
c) exécution (S3) d'un processus d'authentification correspondant à la demande d'authentification au sein de l'environnement de déroulement de processus (43) générique au moyen de la description de processus (41, 42) spécifique au protocole d'authentification et des services de base d'authentification (44) et génération d'un résultat d'authentification, une description de processus spécifique au protocole d'authentification (41, 42) étant constituée de plusieurs étapes individuelles, dans lesquelles respectivement un message d'instruction est généré en appelant au moins un service de base d'authentification ; et
d) transmission du résultat d'authentification de l'authentification au client.

13. Procédé selon la revendication 12,
comportant les étapes supplémentaires suivantes :
exécution progressive de processus d'authentification, en particulier de processus d'identification décrits dans un langage de modélisation spécifique à l'application ou en XML, par l'environnement de déroulement de processus (43) générique stocké ; et
exécution des services de base d'authentification (44) pour le traitement d'étapes individuelles des processus d'authentification.

14. Procédé selon l'une des revendications de procédé précédentes,
**caractérisé par le fait que**
l'environnement de déroulement de processus (43) générique stocké exécute progressivement des processus BPEL, Business Process Execution Language.
